Europäisches Patentamt

European Patent Office

Office européen des brevets

(19)

(11) **EP 0 725 995 B1**

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(21) Anmeldenummer: **94928259.4**

(22) Anmeldetag: **29.09.1994**

(51) Int Cl.$^6$: **H02M 3/156**, G05F 1/573

(86) Internationale Anmeldenummer:
**PCT/DE94/01128**

(87) Internationale Veröffentlichungsnummer:
**WO 95/12916 (11.05.1995 Gazette 1995/20)**

(54) **FERNSPEISEEINRICHTUNG**

REMOTE POWER SUPPLY UNIT

INSTALLATION D'ALIMENTATION A DISTANCE

(84) Benannte Vertragsstaaten:
**AT CH DE DK ES FR GB IT LI PT SE**

(30) Priorität: **30.10.1993 DE 4337229**

(43) Veröffentlichungstag der Anmeldung:
**14.08.1996 Patentblatt 1996/33**

(73) Patentinhaber: **ROBERT BOSCH GMBH**
**70442 Stuttgart (DE)**

(72) Erfinder: **NATHAN, Adolf**
**D-71522 Backnang (DE)**

(56) Entgegenhaltungen:
**EP-A- 0 421 516        EP-A- 0 497 106**
**EP-A- 0 559 928        DE-A- 3 604 716**
**GB-A- 2 105 122        US-A- 4 929 882**

**Beschreibung**

Die Erfindung geht aus von einer Fernspeiseeinrichtung gemäß dem Oberbegriff des Patentanspruches 1. Eine solche Fernspeiseeinrichtung ist aus der DE 31 09 087 C2 bekannt.

Die Fernspeiseeinrichtung gemäß DE 31 09 087 C2 weist einen Stromregler auf und einen ausgangsseitig mit dem Stromregler zusammengeführten Spannungsbegrenzer. Der Spannungsbegrenzer dient zur Begrenzung oder Absenkung der sich am Streckenanfang ergebenden Gleichspannung, insbesondere bei Streckenunterbrechung. Es ist ein Komparator vorgesehen, der den Streckenwiderstand über einen Meßwiderstand mißt. Bei Erhöhung des Streckenwiderstandes über einen vorgegebenen Maximalwert hinaus, wird die Ausgangsspannung auf einen niedrigeren Wert begrenzt. Der Nennausgangsstrom wird nur bei Belastung unter einem Widerstand von 1 Kiloohm abgegeben. Oberhalb dieses Widerstandes erfolgt zum Personenschutz eine Absenkung der Spannung auf z.B. 60 V.

Eine Einrichtung zur Konstantstromregelung des Fernspeisestromes in einem Gleichstrom-Fernspeisesystem ist aus DE 42 10 785 C1 bekannt. Über einen Stromsensor in Form eines Strommeßwiderstandes wird der Fernspeisestrom erfaßt, in einer Regeleinrichtung ausgewertet und als Steuersignal für einen Pulsbreitenmodulator eines Schaltreglers aufbereitet. Die Speiseenergie für die Regeleinrichtung wird direkt aus der Fernspeiseschleife entnommen. Damit diese Stromauswertung nicht verfälscht wird, erfolgt die Speisung der Regeleinrichtung über eine Konstantstromquelle.

Aus JP 63-178 764 (A) in "Patent Abstracts of Japan", Sect. E, 1988, Vol. 12, No. 452, E-687 ist es bekannt in einem Ausgangskreis eines Schaltreglers zur Versorgung eines Verbrauchers sowohl die Ausgangsspannung als auch den Ausgangsstrom zu erfassen und in Abhängigkeit hiervon ein Stellsignal für den Schaltregler aufzubereiten.

Aufgabe vorliegender Erfindung ist es eine Fernspeiseeinrichtung ausgehend vom Oberbegriff des Patentanspruchs 1 so auszubilden, daß eine möglichst hohe Fernspeiseleistung abgegeben werden kann, wobei insbesondere Schutzvorschriften hinsichtlich zugelassener Grenzwerte, z.B. die maximal zulässige Berührspannung, eingehalten werden sollen. Diese Aufgabe wird durch die Merkmale des Patentanspruchs 1 gelöst. Die weiteren Ansprüche zeigen vorteilhafte Weiterbildungen auf.

Die Erfindung beruht auf folgenden Erkenntnissen: Wird die Spannung der Speiseeinrichtung an ihren Ausgangsklemmen erfasst - wie bei der Realisierung gemäß JP 63-178 764 - wird der Fernspeisestrom durch die Spannungsauswerteschaltung beeinflußt; d.h. es fließt durch diese Auswerteschaltung ein Stromanteil, der nicht für die Fernspeisung zur Verfügung steht. Außerdem ist die Spannungsauswertung an den Ausgangsklemmen für eine Stromauswertung mit hoher Genauigkeit nicht brauchbar. Bei der Erfindung wird der Fußpunkt des Spannungsbegrenzers verfälschungsfrei bezüglich des Fernspeisestromes so nachgeführt, daß der Spannungsabfall am Stromsensor des Fernspeisestromreglers für die Spannungsauswertung kompensiert ist. An den Ausgangsklemmen der Fernspeiseeinrichtung steht dann die maximal mögliche Berührspannung, nach VDE 0800/DIN 57800 eine Fernspeisegleichspannung 120 V, zur Verfügung. Im Gegensatz zu bekannten Lösungen mit einer Spannungsbegrenzung hinter dem Stromregler steht damit die maximal mögliche Fernspeiseleistung zur Verfügung, was die Reichweite der Fernspeisung erhöht. Durch die höhere Reichweite kann die Zahl der Zwischenregenerator in Nachrichtenübertragungssystemen, insbesondere in Glasfaserübertragungssystemen, reduziert werden.

Ein Ausführungsbeispiel der Erfindung wird nun anhand der Zeichnungen näher erläutert. Es zeigen

Fig. 1 eine schematisch dargestellte Fernspeiseeinrichtung,
Fig. 2 einen Stromlaufplan eines Ausführungsbeispiels der Erfindung.

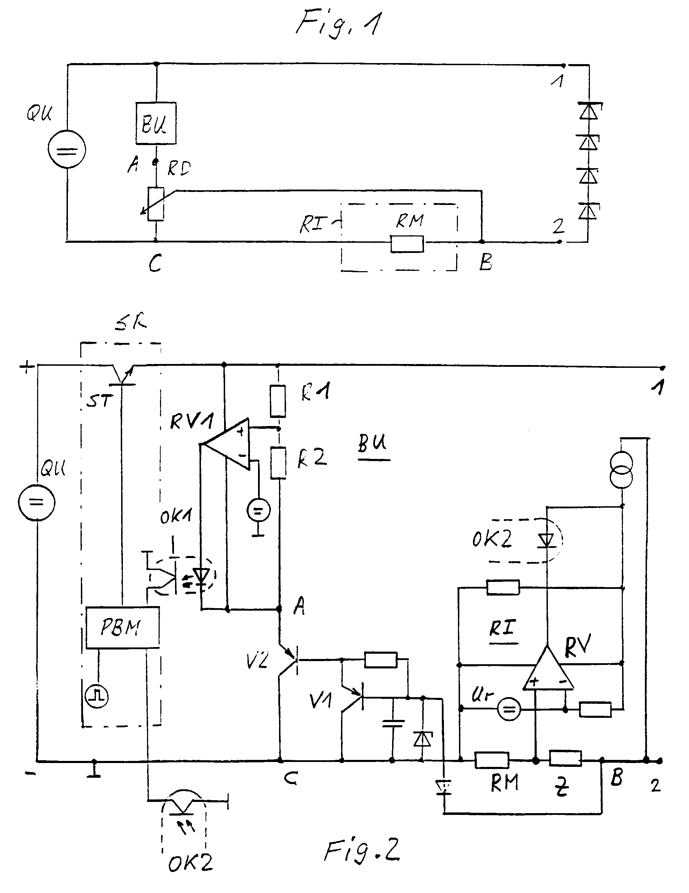

Die in Fig. 1 schematisch dargestellte Fernspeiseeinrichtung weist eine Versorgungsspannungsquelle QU auf. Zwischen den Klemmen dieser Versorgungsspannungsquelle liegt die Serienschaltung eines Spannungsbegrenzers BU und einem dynamischen Widerstand RD. Die Ausgangsklemmen der Fernspeiseeinrichtung sind mit 1,2 bezeichnet. Die Fernspeisestrecke mit angeschlossenen Verbrauchern ist schematisch durch eine Serienschaltung von Zenerdioden dargestellt. Anstelle von Zenerdioden kann die Fernspeisestrecke mit Verbrauchern durch komplexe Widerstände dargestellt werden. In der Rückleitung der Fernspeiseeinrichtung, d.h. zwischen der Klemme 2 und dem Fußpunkt des dynamischen Widerstandes, der mit der Versorgungsspannungsquelle QU verbunden ist, ist ein Fernspeisestromregler RI angeordnet. Sein Stromsensor ist durch den Strommeßwiderstand RM charakterisiert. Der Spannungsabfall am Strommeßwiderstand RM des Fernspeisestromreglers RI wird gemessen und der dynamische Widerstand RD in Abhängigkeit dieses Spannungsabfalls nachgestellt. Die Nachstellung erfolgt dabei derart, daß der Spannungsabfall am Strommeßwiderstand RM gerade so groß ist wie der Spannungsabfall am dynamischen Widerstand RD. Es gilt demnach im Idealfall:

$$U_{AC} = U_{BC}.$$

Wird eine Pegelumsetzung bzw. eine Impedanzwandlung vorgenommen, gilt allgemein:

$$U_{AC} = V \cdot U_{BC} + K_{const} \, ,$$

wobei V einen Verstärkungsfaktor darstellt.

Der Spannungsbegrenzer BU ist so dimensioniert, daß er erst anspricht, d.h. die Spannung der Versorgungsspannungsquelle QU reduziert, wenn die Fernspeisespannung den Maximalwert von 120 V erreicht hat.

Wie das Ausführungsbeispiel gemäß Fig. 2 zeigt, kann der dynamische Widerstand aus einem Regeltransistor V2 bestehen, der in Abhängigkeit des Spannungsabfalles $U_{BC}$ gesteuert wird. Damit der Steuerstrom für den dynamischen Widerstand RD vernachlässigbar klein gehalten werden kann, wird er vorzugsweise durch zwei in Darlington-Schaltung betriebene Transistoren V1 und V2 realisiert.

Der Spannungsbegrenzer BU besteht beispielsweise aus einem Regelverstärker RV1, der über den Spannungsteiler R1, R2 gesteuert wird, welcher zwischen der Klemme 1 und Punkt A angeschlossen ist.

Steigt die Ausgangsspannung US des Schaltreglers SR infolge einer Entlastung der Fernspeiseeinrichtung an, wird der Optokoppler OK1 angesteuert und ein Pulsbreitenmodulator PBM greift verkürzend auf die Leitzeit des Schaltreglerstellgliedes ST ein. Der Fernspeisestromregler RI kann ebenso Bestandteil des Schaltreglers SR sein, indem ein fernspeisestromproportionales Signal ebenfalls das Stellglied des Schaltreglers SR beeinflusst. Der Fernspeisestromregler RI und der Spannungsbegrenzer BU sind so dimensioniert, daß im Normalfall der Fernspeisestromregler RI im Regelbetrieb ist. Erst im Falle einer Entlastung in der Fernspeiseschleife löst der Spannungsbegrenzer BU den Fernspeisestromregler RI ab.

Für den Stromsensor RM des Fernspeisestromreglers kann anstelle eines Strommeßwiderstandes ein Meßwandler oder ein entsprechendes Element verwendet werden. Der Fernspeisestromregler RI kann entsprechend dem Stromregler gemäß DE 42 10 785 C1 aufgebaut sein, d.h. ein Regelverstärker RV vergleicht den Spannungsabfall am Strommeßwiderstand RM mit einer Referenzspannung Ur. Übersteigt dieser Spannungsabfall den durch die Referenzspannung Ur vorgegebenen Schwellwert, wird ein stromproportionales Signal über den Optokoppler OK2 zum Pulsbreitenmodulator PBM für das Schaltreglerstellglied ST übertragen.

Zusätzliche Spannungsabfälle in Serie zum Strommeßwiderstand (durch Z symbolisiert), die z.B. zur Stromversorgung des Fernspeisestromreglers RI notwendig sind oder prinzipbedingt vorhanden sind (z.B. Leitungszüge, Koppler), verfälschen die Spannungsauswertung nicht, da direkt eine Auswertung an der Ausgangsklemme (Punkt B) erfolgt. Der Spannungsabfall am Stromsensor RM, bzw. am komplexen Widerstand Z, kann auch zur Stromregelung und/oder Stromüberwachung herangezogen werden.

## Patentansprüche

1. Fernspeiseeinrichtung bestehend aus einer geregelten Versorgungsspannung (QU) oder aus einer Versorgungsspannungsquelle (QU) mit nachgeschaltetem Schaltregler (SR), einem Fernspeisestromregler (RI) und einem Spannungsbegrenzer (BU) zur Begrenzung der Fernspeisespannung auf einen Maximalwert, dadurch gekennzeichnet, daß dem vor dem Fernspeisestromregler (RI) angeordneten Spannungsbegrenzer (BU) ein vom Fernspeisestromregler (RI) einstellbarer dynamischer Widerstand (RD) in Serie geschaltet ist, dessen Fußpunkt mit dem Stromregler (RI) verbunden ist und der so einstellbar ist, daß sein Spannungsabfall dem Spannungsabfall am Stromsensor (RM) und gegebenenfalls weiteren Spannungsabfällen (Z) des Fernspeisestromreglers (RI) entspricht.

2. Fernspeiseeinrichtung nach Anspruch 1, dadurch gekennzeichnet, daß der Spannungsbegrenzer (BU) so dimensioniert ist, daß die Fernspeisespannung an den Ausgangsklemmen (1, 2) der Fernspeiseeinrichtung der maximal zulässigen Berührspannung entspricht.

3. Fernspeiseeinrichtung nach Anspruch 1 oder 2, dadurch gekennzeichnet, daß der Stromsensor (RM) des Fernspeisestromreglers (RI) zwischen eine der Ausgangsklemmen (1, 2) der Fernspeiseeinrichtung und den zur Versorgungsspannungsquelle (QU) weisenden Anschluß des dynamischen Widerstandes (RD) geschaltet ist und daß der Steueranschluß des dynamischen Widerstandes (RD) in Wirkverbindung zu jedem Anschluß des Stromsensors (RM) steht, der zu einer Ausgangsklemme (1, 2) der Fernspeiseeinrichtung führt.

4. Fernspeiseeinrichtung nach einem der Ansprüche 1 bis 3, dadurch gekennzeichnet, daß der dynamische Widerstand (RD) aus mindestens einem Regeltransistor (V1, V2) besteht, der in Abhängigkeit des Spannungsabfalls am Stromsensor (RM) des Fernspeisestromreglers (RI) regelbar ist.

5. Fernspeiseeinrichtung nach einem der Ansprüche 1 bis 4, dadurch gekennzeichnet, daß der Stromsensor (RM) aus einem Strommeßwiderstand oder einem Meßwandler besteht.

6. Fernspeiseeinrichtung nach einem der Ansprüche 1 bis 5, dadurch gekennzeichnet, daß der Versorgungsspannungsquelle (QU) ein Schaltregler (SR) nachgeschaltet ist, wobei die Leitzeit seines Stellgliedes (ST) in Abhängigkeit des Ausgangssignals des Spannungsbegrenzers (BU) und/oder des Fernspeisestromreglers (RI) verstellbar ist.

**7.** Fernspeiseeinrichtung nach einem der Ansprüche 1 bis 6, dadurch gekennzeichnet, daß der Spannungsabfall am Stromsensor (RM) bzw. weitere Spannungsabfälle zur Stromregelung der Fernspeiseeinrichtung auswertbar sind.

## Claims

**1.** Remote supply device comprising a regulated supply voltage (QU) or a supply voltage source (QU) having a downstream switched-mode regulator (SR), a remote supply current regulator (RI) and a voltage limiter (BU) for limiting the remote supply voltage to a maximum value, characterized in that a dynamic resistor, which can be adjusted by the remote supply current regulator (RI), is connected in series with the voltage limiter (BU) arranged upstream of the remote supply current regulator (RI) and its base point is connected to the current regulator (RI) and is adjustable such that its voltage drop corresponds to the voltage drop across the current sensor (RM) and possibly further voltage drops (Z) of the remote supply current regulator (RI).

**2.** Remote supply device according to Claim 1, characterized in that the voltage limiter (BU) is dimensioned such that the remote supply voltage at the output terminals (1, 2) of the remote supply device corresponds to the maximum permissible touch voltage.

**3.** Remote supply device according to Claim 1 or 2, characterized in that the current sensor (RM) of the remote supply current regulator (RI) is connected between one of the output terminals (1, 2) of the remote supply device and that connection of the dynamic resistor (RD) which points towards the supply voltage source (QU), and in that the control connection of the dynamic resistor (RD) is operatively connected to each connection of the current sensor (RM) which leads to an output terminal (1, 2) of the remote supply device.

**4.** Remote supply device according to one of Claims 1 to 3, characterized in that the dynamic resistor (RD) comprises at least one control transistor (V1, V2) which can be controlled as a function of the voltage drop across the current sensor (RM) of the remote supply current regulator (RI).

**5.** Remote supply device according to one of Claims 1 to 4, characterized in that the current sensor (RM) comprises a current measuring resistor or an instrument transformer.

**6.** Remote supply device according to one of Claims 1 to 5, characterized in that the supply voltage source (QU) has a switched-mode regulator (SR) connected downstream of it, the ON time of its control element (ST) being adjustable as a function of the output signal of the voltage limiter (BU) and/or of the remote supply current regulator (RI).

**7.** Remote supply device according to one of Claims 1 to 6, characterized in that the voltage drop across the current sensor (RM) and further voltage drops can be evaluated in order to regulate the current of the remote supply device.

## Revendications

**1.** Installation d'alimentation à distance, consistant en une tension d'alimentation réglée (QU) ou en une source de tension d'alimentation (QU) avec un régulateur de commande ajusté (SR), un régulateur d'intensité d'alimentation à distance (RI) et un limiteur de tension (BU) servant à limiter la tension d'alimentation à distance à une valeur maximale, caractérisée en ce que
l'on monte en série une résistance dynamique pouvant être réglée par le régulateur de l'intensité d'alimentation (RI) à distance avec le limiteur de tension (BU), disposé avant le régulateur de l'intensité d'alimentation à distance (RI), résistance dynamique dont la base est reliée au régulateur d'intensité (RI) et qui peut être réglée d'une façon telle que sa chute de tension correspond à la chute de la tension sur le détecteur de l'intensité (RM) et le cas échéant à d'autres chutes de tension (Z) du régulateur d'intensité d'alimentation à distance (RI).

**2.** Installation d'alimentation à distance selon la revendication 1,
caractérisée en ce que
le limiteur de tension (BU) est dimensionné d'une manière telle que la tension d'alimentation à distance correspond, aux bornes de sortie (1, 2) de l'installation d'alimentation à distance à la tension de contact maximale autorisée.

**3.** Installation d'alimentation à distance selon la revendication 1 ou 2,
caractérisée en ce que
le détecteur d'intensité (RM) du régulateur d'intensité d'alimentation à distance (RI) est branché entre l'une des bornes de sortie (1, 2) de l'installation d'alimentation à distance et le raccord de la résistance dynamique (RD), qui est tourné vers la source de tension d'alimentation (QU) et en ce que
le raccord de commande de la résistance dynamique (RD) est en liaison opérationnelle avec chaque raccord du détecteur d'intensité (RM), qui mène à une borne de sortie (1, 2) de l'installation d'alimentation à distance.

**4.** Installation d'alimentation à distance selon l'une des revendications 1 à 3, caractérisée en ce que la résistance dynamique (RD) consiste au moins en un transistor de réglage (V1, V2) qui peut être réglé en fonction de la chute de la tension sur le détecteur d'intensité (RM) du régulateur de l'intensité d'alimentation à distance (RI).

**5.** Installation d'alimentation selon l'une des revendications 1 à 4, caractérisée en ce que le détecteur d'intensité (RM) consiste en une résistance de mesure du courant ou en un transformateur de mesure.

**6.** Installation d'alimentation selon l'une des revendications 1 à 5, caractérisée en ce qu' un régulateur de commande (SR) est monté en aval de la source de la tension d'alimentation (QU), le temps de commande de son organe de réglage (ST) pouvant être réglé en fonction du signal de sortie du limiteur de tension (BU) et/ou du régulateur de l'intensité d'alimentation à distance (RI).

**7.** Installation d'alimentation à distance selon l'une des revendications 1 à 6, caractérisée en ce que l'on peut exploiter la chute de la tension sur le détecteur d'intensité (RM) ou d'autres chutes de tension servant à régler l'intensité de l'installation d'alimentation à distance.

Fig. 1

Fig. 2